# EUROPÄISCHE PATENTANMELDUNG

(11) **EP 1 281 947 A1**
(43) Veröffentlichungstag der Anmeldung: **05.02.2003**
(21) Anmeldenummer: 02017418.1
(22) Anmeldetag: 02.08.2002
(51) Int. Cl.: G01L 9/00

(54) **Hochdrucksensor und Verfahren zur Herstellung eines Hochdrucksensors**

(30) Priorität: 03.08.2001 DE 10138088; 30.04.2002 DE 10219497
(71) Anmelder: Trafag AG, 8708 Männedorf (CH)
(72) Erfinder: Stark, Daniel, CH-8646 Wagen (CH); Häberli, Roman, CH-8712 Stäfa (CH); Wild, Werner, Ch-8643 Hombrechtikon (CH); Zeisel, Dieter, CH-8127 Forch (CH)
(74) Vertreter: Kastel, Stefan Dipl.-Phys.

(57) **Zusammenfassung**

Die vorliegende Erfindung beinhaltet die Konstruktion von auf über 2000 bar ausgelegten, genauen schnell ansprechenden Hochdrucksensoren (2, 50, 80) ohne medienberührende Schweissnaht, die aus einem einzigen Rohrleitungs- oder Verschraubungsstück (6, 52, 82) aufgebaut sind und ohne die Gefahr von Leckagen hochdrucksicher an die zu vermessenden Elemente, wie Hochdruckrohrleitungen in Common-Rail-Motoren oder Hochdruckschneidsystemen, anschraubbar sind.

## Beschreibung

Die Erfindung betrifft einen Hochdrucksensor, ausgelegt auf Spitzendrücke oberhalb von 2000 bar, insbesondere zur Messung von pulsierenden Drücken hydraulischer Systeme oder in Hochdruckschneidesystemen, mit:
- einem einstückigen Messkörper, in den eine Sacköffnung durch Materialaustrag eingebracht ist, so dass der Messkörper einen in der Sacköffnung ausgebildeten das zu messende Medium unmittelbar aufnehmenden Messdruckraum umschließt, der durch eine einstückig mit dem Messkörper durch Druckbeaufschlagung in dem Messdruckraum auslenkbare Membran begrenzt ist,
- einer Messwandlereinrichtung, die Auslenkungen der Membran in elektronisch verwertbare Signale umwandelt,
- einem als Hochdruckrohrleitungsaußengewinde ausgebildeten Anschlussgewinde zum Anschließen des Hochdrucksensors an eine Anschlussöffnung in einem das druckbeaufschlagte Medium beinhaltendes Element und
- einem Werkzeugangriffsbereich wie Sechskant oder dergleichen zu Ermöglichen eines Eindrehens des Hochdrucksensors in die Anschlussöffnung.
Außerdem betrifft die Erfindung ein Verfahren zum Herstellen eines solchen Hochdrucksensors. Ein solcher Hochdrucksensor sowie ein solches Verfahren sind aus der EP 0 994 250 A2 bekannt, auf die hiernach noch näher eingegangen wird.

Einspritzdrucksysteme für Kraftstoffe auf Basis "Common Rail" oder "Pumpe-Düse" und damit versehene Hochdrucksensorelemente haben in den letzten Jahren einen rasanten Aufstieg in der Dieselmotorentechnik erfahren.

Typischerweise enthalten die Einspritzdrucksysteme, wie sie zum Beispiel aus der US-A-6 016 791 bekannt sind, mindestens eine Kraftstoffpumpe, mehrere Düsen oder Einspritzventile sowie einen gemeinsamen Zwischenspeicher (Akkumulator *= engl.* common rail) und einen Hochdrucksensor. Aus dem Tank wird der Kraftstoff durch den Filter mittels einer von der Motornockenwelle angetriebenen Zahnradpumpe angesaugt. Durch ein elektrisches Notabschaltventil hindurch wird er mit einem Druck von etwa zwei Bar zur Hochdruckpumpe gefördert. Dort teilt sich der Volumenstrom. Ein Teil fließt über eine Drossel im Sicherheitsventil durch den Nockenwellenraum der Hochdruckpumpe hindurch als Kühlstrom zum Druckregelventil und von dort in den Tankrücklauf ab. Der andere Teil befüllt die Pumpelemente der Dreizylinder-Hochdruckpumpe. Von dort wird der auf einen Hochdruck bis zu 1350 bar (und höher) verdichtete Kraftstoff zum gemeinsamen Zwischenspeicher (Common Rail) gefördert. An dieser Rail befindet sich der Hochdrucksensor zur Erfassung des Ist-Druckes. Ein Druckregelventil steuert den Volumenstrom durch Abregeln in den Rücklauf so, dass der vom Steuergerät vorgegebene Raildruck aufgebaut wird. Von der Rail aus fließt der Kraftstoff zu den Injektoren.

Daneben finden Hochdrucksensoren Anwendung in Wasserstrahlschneidewerkzeugen, wo Spitzendrücke bis zu 5000 bar erzielt werden.

Während der Motorenhersteller bestrebt ist das gesamte Motorenmanagement inklusive Einspritzdrucksystem zu optimieren, legt der Sensorkomponentenhersteller den Schwerpunkt auf ausfallsichere und langzeitstabile Komponenten. Dabei müssen von dem Sensorelement Drücke äusserst reproduzierbar (2% Gesamtfehler über die Lebensdauer ohne Nullpunktverschiebung) bis zu 2000 bar gemessen werden, bei einer Wiederholrate bis zu 10 Millionen Lastzyklen.

Es sind die verschiedensten Drucksensoren bekannt geworden, die in der Patentliteratur häufig auch als "Hochdrucksensoren" bezeichnet werden. Tatsächlich hält kaum einer der bekannten Drucksensoren Drücke über 1400 bar aus, oder sie sind zu ungenau oder zu langsam und sind damit für die hier erwünschten Einsatzzwecke ungeeignet.

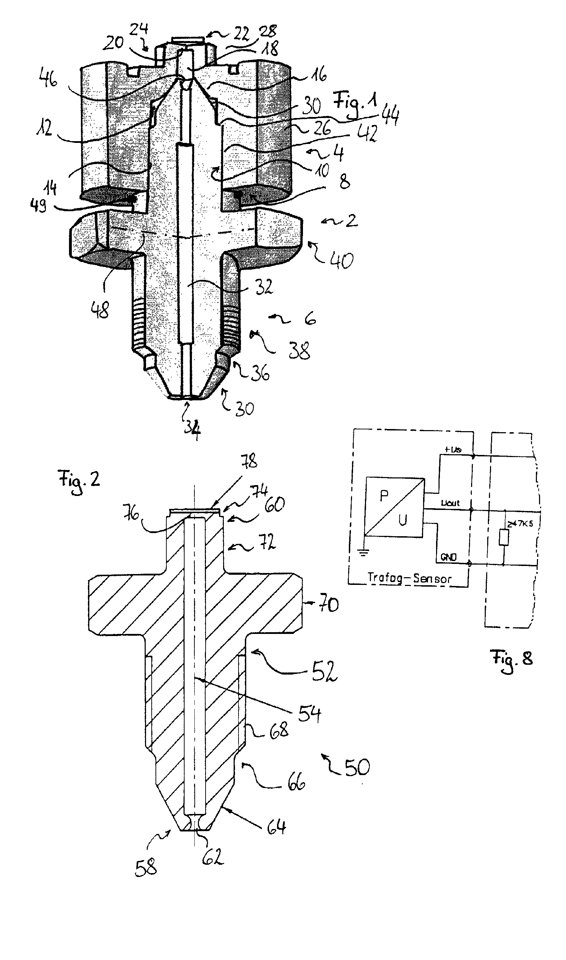

So beschreibt die EP 0 710 826 A2 einen "Hochdrucksensor" und ein Verfahren für dessen Herstellung. Der Sensor soll aber nurfür Drücke bis 14 MPa (140 bar) Spitzendruck geeignet sein. Hierzu weist der Sensor gemäß Fig. 1 ein Gehäuse mit einer hohlen Aufnahmestruktur auf. Das Gehäuse ist in einem Stück hergestellt durch Spritzgussverfahren aus hochfesten Kunststoffen wie glasverstärktem Kunststoff, Flüssigkristallpolymer (LCP) oder glasverstärktem Polyphenylsulfiden (PPS). Eine Membran trennt das Gehäuse in einen oberen und unteren Hohlraum. Die Membran ist aus Kunststoff integral mit dem Gehäuse beim Spritzgussverfahren hergestellt.

Die DE 31 22 375 A1 beschreibt eine Sensoranordnung für Diesel-Einspritzpumpen und die darin herrschenden hohen Drücke. Aufgrund des Alters dieser Druckschrift - sie stammt aus dem Jahre 1981 - können damit jedoch kaum Spitzendrücke über 2000 bar gemeint sein. Die Sensoranordnung weist einen als Dehnschraube ausgebildeten Bolzen auf. Der Bolzen hat eine axiale Bohrung und eine verjüngten Abschnitt. Durch Druck in der axialen Bohrung verformt sich der verjüngte Abschnitt. Diese Verformung wird über einen Schraubenkopf an dem Bolzen auf einen als Unterlegscheibe ausgebildeten Kraftaufnehmer übertragen.

Die DE 39 12 177 A1 beschreibt einen Drucksensor für Kraftfahrzeug-Motoren. Die Figur zeigt als Druckaufnehmer ein kappenartiges Rohrstück, der allerdings anders herum als bei den hier in Rede stehenden Sensoren verwendet wird. Das Rohrstück ist mit einer Sackbohrung vesehen, in der eine Temperaturkompensation und ein Kraftaufnehmer untergebracht sind.

Die bereits aus dem Jahre 1946 stammende US 2 477 026 beschreibt einen Hochdruck-Sensor, der bis maximal 1700 bar ausgelegt sein soll. Als Druckaufnehmer ist eine elastische Röhre eingesetzt, die in einen oberen und unteren Endbereich getrennt ist. Die Röhre besteht aus hochfestem Stahl oder auch aus Kunststoff. Als Biegeelement dient die Zylinderwand, um welche ein sich bei Dehnung im Widerstand ändernder Draht gewickelt ist. Ein solches Aufnahmeprinzip ist naturgemäß langsam und ungenau und für die Erfassung schnell wechselnder oder pulsierender Drücke, wie sie beispielsweise in Dieseleinspritzsystemen vorkommen, vollkommen ungeeignet.

Die EP 0 911 623 A2 beschreibt einen "Hochdrucksensor", bei dem der Druckaufnehmer aus einer Edelstahllegierung ausgeführt ist. Die Membran wird durch Ätzen, Stanzen oder Fräsen geformt. Die so geformte Druckzelle wird durch Schweißen an einem Anschlussstück angebracht. Dieser Sensor soll ca. 70 MPa (700 bar) aushalten.

Bei dem Drucksensor gemäß der DE 198 13 756 A1 ist die Membran Teil eines Messobjekts, beispielsweise Teil des Einspritzsystems eines Common-Rail-Teils. Hierzu wird zum Beispiel die Wandung des Einspritzsystems mit einem rückseitigen Sackloch versehen. Der Boden des Sackloches bildet die Membran. In dem Sackloch ist der Kraftaufnehmer untergebracht. Als beispielhaftes Messobjekt ist der Injektionskörper eines Common-Rail-Einspritzsystems genannt.

Erst neuere Hochdrucksensoren der in den Oberbegriffen der unabhängigen Ansprüche genannten Art, wie sie aus der relativ jungen, eingangs erwähnten EP 0 994 250 A2 bekannt, sind einerseits auf Spitzendrücke über 2000 bar ausgelegt und andererseits auswechselbar, vielseitig verwendbar und schnell und genau genug, um den Anforderungen in modernen Anwendungsgebieten, wie beispielsweise in der Steuerung und Überwachung von Common-Rail-Motoren oder von Hochdruckschneidanlagen gerecht zu werden. Solche Hochdrucksensoren werden normalerweise direkt mit dem Rohrleitungssystem mittels hochdrucksicherer Verschraubungen verbunden. Durch die lösbare Verbindung ist die Wartung und der Austausch der Systeme ermöglicht. Die Sensoren sind überall, wo passende Aufnahmeöffnungen vorhanden sind, einsetzbar. Der eigentliche Messkörper, der auch als Sensorelement bezeichnet werden kann, wird hierzu bei dem bekannten Hochdrucksensor auf ein Anschlussstück aufgeschweißt, das zum Herstellen einer Hochdruckverbindung einen Sechskant als Werkzeugangriffbereich und am freien Ende einen Dichtungskonus sowie das Anschlussgewinde aufweist. Die Schweißverbindung zwischen dem Messkörper und dem Anschlussstück steht unmittelbar mit dem Medium in Kontakt. Die EP 0 994 250 A2 stellt gerade die besondere Ausführung dieser Schweißverbindung in den Vordergrund.

Hochdruckleitungssysteme, deren Einzelelemente durch Hochdruckverschraubungen miteinander verbunden sind, sind im Stand der Technik bekannt. Beispiele hierfür finden sich in den Druckschriften DE 197 53 518 A1, DE 27 44 345 C2, DE 23 44 445 C3, DE 34 22 630 C2, DE 29 11 919 A1. Auch sind Hochdruckrohrleitungen kommerziell erhältlich. Datenblätter und Spezifikationen von Hochdruckleitungen der Firmen Sitec und NovaSwiss sind im Internet zu finden, Ausdrucke sind als Anlage zu der hier vorliegenden Patentanmeldung beigefügt.

Aufgabe der Erfindung ist es, es ausgehend vom Stand der Technik nach der EP 0 994 250 A2 einen Hochdrucksensor der eingangs genannten Art langzeitstabiler und ausfallsicherer zu machen.

Bei bisher unveröffentlichten Versuchen und einigen unveröffentlichten Ausfällen in praktischen Anwendungen hat sich die medienberührende Schweissverbindung der bekannten Hochdrucksensoren generell als eine mögliche Fehler- und Ausfallquelle herausgestellt. Die Schweißverbindung ist vor allem gefährlich in sicherheitstechnisch relevanten Umgebungen. So kann es in ungünstigen Fällen, z.B. auch bei Großdieselmotoren wie sie in Kreuzfahrtschiffen eingesetzt sind, zu Leckagen gerade an der Schweißverbindung kommen. Durch ausströmenden Dieselkraftstoff bei Grossdieselmotoren entsteht eine erhebliche Brandgefahr. Ein Abstellen des Schiffsdiesels in einem solchen Fall ist aber nicht möglich, da dann das Schiff manövrierunfähig wird. Hochdrucksensoren her hier in Rede stehenden Art können dadurch, obwohl relativ preisgünstig, bei Ausfall Millionen-Schäden verursachen.

Die vorliegende Erfindung beinhaltet die Konstruktion von auf über 2000 bar ausgelegten genauen schnell ansprechenden Hochdrucksensoren ohne medienberührende Schweissnaht, die aus einem einzigen Rohrleitungs- oder Verschraubungsstück aufgebaut sind und ohne die Gefahr von Leckagen hochdrucksicher an die zu vermessenden Elemente, wie Hochdruckrohrleitungen in Common-Rail-Motoren oder Hochdruckschneidsystemen, anschraubbar sind.

Zum Lösen der vorerwähnten Aufgabe ist daher gemäß einem Aspekt der Erfindung ein Hochdrucksensor der eingangs genannten Art dadurch gekennzeichnet, dass die Sacköffnung des einstückigen Messkörpers an ihrem offenen Ende mit einem ersten Bereich größerer Weite, der mit einem Innengewinde versehen ist, an ihrem durch die Membran verschlossenen Ende mit einem zweiten Bereich kleinerer Weite, und mit einem konischen Übergang zwischen diesen Bereichen versehen ist, dass in dieses Innengewinde ein mit einem passenden ersten Außengewinde und zu dem konischen Bereich passenden ersten Konus versehenes erstes Ende eines Anschlusszwischenstücks nach Art einer Hochdruckverschraubung eingeschraubt ist, dass das Anschlusszwischenstück rohrförmig nach Art einer Hochdruckleitung ausgebildet ist und an einem zweiten Ende mit dem Anschlussgewinde und einem zweiten Konus und zwischen seinen beiden Enden an seinem Außenumfang mit dem Werkzeugangriffbereich versehen ist und dass die Verschraubung von Anschlussstück und Messkörper durch einen Verdrehschutz gesichert ist.

Anstelle des Anschraubens des Anschlussstücks kann dieses zum Lösen der der Erfindung zugrundeliegenden Aufgabe aber auch integral mit dem Messkörper ausgebildet sein. Dementsprechend ist gemäß einem weiteren Aspekt der Erfindung ein Hochdrucksensor der eingangs genannten Art dadurch gekennzeichnet, dass der Messkörper selbst einstückig als kappenartiges Hochdruckrohrleitungsstück ausgebildet ist, das an seinem mit der Öffnung versehenen Ende mit dem Anschlussgewinde und einem Konus versehen ist, um den Messkörper nach Art einer Hochdruckverschraubung mit dem das druckbeaufschlagte Medium beinhaltende Element zu verschrauben, wobei der Werkzeugangriffbereich einstückig angeformt ist oder als Ringelement über den Messkörper geschoben daran fixiert ist.

Die Erfindung schafft allgemeiner einen Hochdrucksensor ohne Schweissnaht, der einen Monokörper mit einem damit einstückigen Membranelement aufweist.
- Verfahrensmäßig wird die der Erfindung zugrundeliegende Aufgabe gelöst durch ein Verfahren zum Herstellen eines Hochdrucksensors, insbesondere der eingangs genannten Art, der auf Spitzendrücke oberhalb von 2000 bar, insbesondere zur Messung von pulsierenden Drücken hydraulischer Systeme oder in Hochdruckschneidesystemen, ausgelegt ist, wobei das Verfahren die Schritte
   a) Bereitstellen eines vorzugsweise homogenen, massiven, weiter vorzugsweise länglichen, insbesondere stabförmigen Messkörperrohlings aus ausscheidungsgehärtetem martensitischen Stahl,
   b) materialaustragendes Einbringen der Sacköffnung im wesentlichen konzentrisch zur Längsmittellinie des Messkörperrohlings, wobei die Membran die Sacköffnung begrenzend stehen gelassen wird,
   c) Ausformen des Anschlussgewindes an einem äußeren Umfangsbereich nahe dem mit der Mündung der Sacköffnung versehenen freien Ende des Messkörpers,
   d) Ausformen oder Anbringen des Werkzeugangriffsbereichs und
   e) Anbringen der Messwandlereinrichtung an der Membran, aufweist und wobei die Reihenfolge der Schritte c) bis f) beliebig ist.

Allgemeiner formuliert schlägt die Erfindung ein Verfahren zum Herstellen eines Hochdrucksensors, vor, bei dem ein einstückiger kappenartiger Körper durch Materialaustrag wie Ausfräsen und/oder Ausbohren einer Sacköffnung derart hergestellt wird, derart dass das geschlossenes Ende der Sacköffnung als Druckmembran verwendbar ist, wobei ein Wegaufnehmer auf das geschlossene Ende aufgebracht wird.

Vorteilhafte Ausgestaltungen der Erfindung sind Gegenstand der Unteransprüche. Es wird aber betont, dass die beigefügten Ansprüche nur als Formulierungsversuch anzusehen sind, wobei alle ihre Einzelmerkmale oder hier beschriebene oder in den Zeichnungen gezeigte Merkmale ganz nach Belieben weggelassen, hinzugefügt oder neu kombiniert werden können, je nachdem welchen Einzelaspekt der gesamten Offenbarung man mehr betonen möchte.

Vorzugsweise hat der Hochdrucksensor einen zusätzlichen Wegaufnehmer, insbesondere mit Messbrücke.

Bei einem ersten bevorzugten Konstruktionsprinzip ist ein Anschlussstück vorzugsweise mit zwei axialsymmetrischen Hochdruckverschraubungen vorgesehen, dass hochdrucksicher nach Art einer verschraubten Hochdruckleitung in den Monokörper eingeschraubt ist.

Das Anschlussstück kann dabei symmetrisch zu seiner sich senkrecht zu seiner Längsachse erstreckenden Mittelebene ausgebildet sein. Auf diese Weise wird das membranseitige Ende und das Anschlussende gleich dimensioniert und ausgebildet, die Fertigung und Handhabung - die Möglichkeit einer verkehrten Anordnung ist ausgeschlossen - ist dadurch erleichtert. Ein mittig in dem Anschlussstück angeordneter Werkzeugangriffsbereich wie z.B. ein Sechskant, kann sowohl zum Einschrauben des Anschlussstücks in den Messkörper als auch zum Einschrauben des Sensors in das Element, das das zu vermessende Medium beinhaltet verwendet werden.

Nach einem anderen bevorzugten Konstruktionsprinzip ist ein schweißfreier Hochdrucksensors wie kommerziell erhältliche Rohrleitungssysteme aufgebaut. Er umfasst vorzugsweise eine kappenartig an einem Ende geschlossene Rohrleitung mit konischem Dichtende. Es kann eine Sechskantverschraubung und/oder ein zusätzlich aufgebrachter Wegaufnehmer oder DMS vorgesehen sein.

Auf die als integraler Bestandteil des Monokörpers oder einstückigen Messkörpers ausgebildete Membran kann ein Kraftaufnehmer als metallische Folie lokal aufgeschweißt sein.

Das Anschlusstück wird bei der ersten Konstruktionsweise bevorzugt derart ausgeführt, dass der Monokörper, der die Messzelle oder den Messdruckraum enthält, analog einer Hochdruck-Verschraubung auf einem axialsymmetrischen Anschlussstück fixiert wird. Eine Messbrücke kann nun entweder direkt auf dem Monokörper aufgebracht werden oder mit Hilfe eines zusätzlichen Wegaufnehmers, z. B. eines Biegebalkens oder Kraftaufnehmers, der an den Stellen der höchsten druck-induzierten Wegänderungen angeordnet ist, mit dem Grundkörper verbunden werden. Es ist vorteilhaft, dieses System zusätzlich noch mit einem Verdrehschutz auszustatten, damit sich der Messkörper oder Monokörper nicht von dem membranseitigen Anschlussgewinde des Anschlussstückes lösen kann. Hierzu käme beispielsweise eine Verklebung oder unkritische, weil außen außerhalb des Hochdrucksbereichs angesetzte Verschweißung - eine lokal begrenzte Schweißung an einem Punkt reicht im Prinzip aus - oder dergleichen in Betracht.

Ein schweißfreier Hochdrucksensor kann auch wie kommerziell erhältliche Hochdruckrohrleitungssysteme (siehe z.B. Fa. SITEC, 8124 Maur/Schweiz der Fa. NovaSwiss, Effretikon/Schweiz) aufgebaut werden. Hierfür werden die Sacklöcher oder Bohrungen bevorzugt mittels Tieflochbohren mit einem Formfräser gefertigt. Anschließend wird das Stirnende des Rohres, das in einer planen Fläche ausläuft, entweder direkt mit der Messbrücke beschichtet oder mit einem zusätzlichen DMS Aufnehmer versehen. Anschließend wird der Sechskant mit dem den Messkörper bildenden Monoblock zusammengefügt.

Bekannte Hochdrucksensoren weisen zur Zeit einen Maximalbereich von 1800 bar auf. Bei Motoren können aber bessere Verbrennungseigenschaften mit kleinerer Tröpfchengrösse d.h. mit noch höheren Drücken (beispielsweise 2200-2500 bar) im Einspritzsystem erzielt werden. Parallel zu diesem Trend sollten die in solchen Einspritzsystemen einzusetzenden Hochdrucksensoren entsprechende Überdrücke (beispielsweise 4000 bar) und Berstdrücke (beispielsweise 6000 bar) aushalten. Außerdem sollten sie deutlich billiger (von ca. 20 EUR für Automobilanwendungen in Richtung auf 10 EUR) und hochtemperaturfester (typisch 150°C) werden.

Dieser aufkommende Kostendruck lässt das vorerwähnte erste Konstruktionsprinzip eines Hochdrucksensors ohne Schweissnaht mit einem flaschenschraubverschlussähnlichen Monokörper mit integrierten Membranelement sowie zwei axialsymmetrischen Hochdruckverschraubungen als weniger bevorzugt erscheinen.

Hingegen ist das zweite Konstruktionsprinzip mit rohrförmiger Ausbildung des einstückigen Messkörpers und daran integral ausgebildeten Anschlussende nach Art einer Hochdruckverschraubung und dem auf ein geschlossenes Ende aufzubringenden Wegaufnehmer doppelt interessant.

Zum einen sind Bohrungen in einem als Material für den Messkörper und damit auch für die damit einstückige Membran am meisten bevorzugten entsprechenden Stahl 17-4 PH Stahl (Martensit, mit die besten Federeigenschaften) leicht realisierbar. Hierfür können speziell geschliffene Bohrer eingesetzt werden, die günstiger sind als supergehärtete Bohrer.

Zum Einbringen der Sacköffnung kann aber auch derart vorgegangen werden, dass mit einem Formfräser eine Grobbohrung vorgestochen und danach mit einem Formbohrer nachbearbeitet wird.

Auf die Oberflächenqualität der inneren Bohrung ist vorzugsweise besonderer Wert zu legen, da bereits leichte Inhomogenitäten unter Wechsellast zu Rissbildungen neigen und zu Ausfällen führen können.

Weiter bevorzugt sollte nach dem Einbringen der Sacköffnung, beispielsweise durch (Tiefloch-)Bohrung, das als integraler Bestandteil des Messkörpers ausgeführte Anschlusstück im Bereich des Konus noch etwas umgeformt werden können, damit hier noch gezielt mit Verengungen gearbeitet werden kann. Die Mündungsweite der Sacköffnung wird normalerweise von dem jeweiligen Einsatzzweck vorgegeben und in der Praxis vom Kunden festgelegt. Durch Umformung des Anschlussstücks nach Einbringen des Sackloches kann dies ohne die übrigen Auslegungen des Hochdrucksensors ändern zu müssen oder Adapter verwenden oder anschweißen zu müssen, bewerkstelligt werden. Die Verengung der Mündung auf das gewünschte Maß kann beispielsweise durch Kaltumformung geschehen.

Der beispielsweise und bevorzugt durch einen Sechskant gebildete Werkzeugangriffsbereich kann nachträglich durch ein unkritisches Schweiss- oder Fügeverfahren (Presssitz) angebracht werden. Unkritisch ist das Schweißverfahren hier, weil der Sechskant außen auf die Rohrwandung des Messkörpers aufgeschweißt wird und damit keine direkte Medienberührung oder Druckbeaufschlagung hat.

Problematisch bei einer solchen Auslegung von Hochdrucksensoren kann die Detektion der Membranauslenkung sein. Die Membran ist so dick auszubilden, dass sie die jeweils geforderten Drücke aushält. Typischerweise hat sie Dicken, die mit den Wandstärken von auf entsprechende Drücke ausgelegten Rohrleitungen vergleichbar ist. Für entsprechende Daten und für auch für die Erfindung heranziehbaren Dimensionierungen, Materialien, Daten und Konstruktionsprinzipien solcher Hochdruckrohrleitungen wird ausdrücklich auf die oben erwähnten Patentschriften DE 197 53 518 A1, DE 27 44 345 C2, DE 23 44 445 C3, DE 34 22 630 C2, DE 29 11 919 A1 und die beigefügten Ausdrucke derzeit kommerziell erhältlicher Systeme verwiesen. Die Detektion der "Atmung", also beispielsweise einer zyklischen oder wiederholten Auslenkung, unter dem Einfluss von 2000 bar (100 Hz) dieser "dicken" Rohrleitung liegt im Bereich von nur 3/1000 - 5/1000 mm. Diese kleine Wegänderung kann nur mit einem hochpräzisem Wegaufnehmer gemessen werden. Ein solcher Wegaufnehmer ist beispielsweise ein dünner Biegebalken oder Kraftaufnehmer mit Dehnmessstreifen (DMS). Solche Biegebalken oder Kraftaufnehmer werden vorzugsweise dicht gepackt zu vielen auf einem Wafer nach Techniken, wie sie in der Halbleitertechnik bekannt sind, produziert und dann vereinzelt.

Vorzugsweise werden die Wegaufnehmer wiederum günstigst als dünne metallische Folie ausgebildet. Diese wird weiter bevorzugt lokal aufgeschweisst. Diese Lösung ist die derzeit bei weitem kostengünstigste und aus diesem Grunde besonders bevorzugt.

Der Aufbau des Sensors auf Basis kommerzieller Hochdrucksysteme bedeutet nicht, dass hier bereits vorhandene oder bekannte Teile unverändert verwendbar sind. Die den Monokörper selbst darstellenden Hochdruckrohre werden vielmehr vorzugsweise entsprechend den speziellen Anforderungen durch die Verwendung eines geschlossenen Endes als Membran entworfen und speziell gefertigt, eventuell kann man aber dies durch Bohrungen in einem Anschlussstück (beispielsweise auch ohne Sechskant, der würde später unkritisch, weil aussen, aufgeschweisst) mit speziell geschliffenen HSS-Bohrern bewerkstelligen. Dabei kann man sich in Bezug auf Dimensionierungen, Bearbeitungs- und Anschlusstechniken sowie eventuell, aber nur eingeschränkt, Materialien anhand kommerziell erhältlicher, in Bezug auf dauerhafte Dichtigkeit bewährter Rohrleitungssysteme orientieren, siehe zum Beispiel die diesbezüglichen Anlagen.

Das für den Monokörper derzeit am besten geeignete Material ist ausscheidungsgehärteter Martensit, denn mit 17-4 PH (1.4542 oder 1.4548) bekommt man die für die meisten Anwendungen erwünschten Federsteifigkeiten und damit auch die gewünschten Überdrucksicherheiten.

In Bezug auf die Dimensionierung des Monokörpers kann man bei Rohrleitungen für Drücke über 4000 bar beispelsweise drei verschiedene Größen finden, nämlich einmal ca. 6,4mm Außendurchmesser bei ca. 2,4 mm Innendurchmesser (Wandstärke 2mm), zum anderen ca. 9,5 mm Außendurchmesser mit Innendurchmesser ca. 3,2 mm und drittens ca. 14,3 mm Außendurchmesser bei 4,8 mm Innendurchmesser. Theoretisch gibt es die Designregel: Innendurchmesser soll ungefähr Wandstärke entsprechen; praktisch zeigen die Systeme jedoch gerade unter Wechsellast (10 Mio Zyklen bei 0...2000 bar), also im dynamischen Fall noch Besonderheiten, die theoretisch bislang nicht vollständig aufgeklärt sind. Die genannten Dimensionierungen sind bei Hochdruckleitungen erprobt und sind somit bei vergleichbaren Materialien auch für auf entsprechenden Prinzipien beruhende Sensorkonstruktionen geeignet. Demgemäß sollte der Durchmesser der Sacköffnung etwa gleich oder kleiner dem 1, 2-fachen der Rohrwandstärke des Messkörpers sein. Die Rohrwandstärke sollte in bevorzugter Ausführung bei entsprechend kleiner Sacköffnung mindestens 2 mm betragen. Vorzugsweise sind die Rohrwandstärken dicker als die Membranstärken. Ein beispielhaftes Verhältnis von Membranstärke zu Wandstärke zu Sacköffnungsdurchmesser liegt bei 1 zu 1 bis 4 zu 1 bis 4

Bei einfacher Fertigung lässt sich eine hohe Druckbeständigkeit und Temperaturbeständigkeit erreichen, wenn die Sacköffnung im wesentlichen zylinderförmig ausgebildet ist und ihre Länge ein Vielfaches, insbesondere mehr als das Vierfache, ihres Durchmesser beträgt. Je länger die Sacköffnung ist, desto weiter kann die Membran mit der Messwandlereinrichtung von einem temperierten Medium entfernt angeordnet werden. Auch kann die Membran von dem oder den Anschlussgewinden beabstandet angeordnet werden, um Verfälschungen durch das Anziehdrehmoment und dadurch bedingte Verspannungen zu vermeiden.

Der Messkörper ist als Monokörper bevorzugt aus einem einzelnen homogenen Material gebildet, so dass er keine Materialgrenzen und keine Inhomogenitäten, die Risse oder Bruchstellen bilden könnten, aufweist.

Ausführungsbeispiele der Erfindung werden nachfolgend anhand der beigefügten Zeichnung näher erläutert. Darin zeigt:
- Fig. 1: eine teilweise weggeschnittene perspektivische Darstellung einer ersten Ausführungsform eines Hochdrucksensors mit einer einstückigen Messzelle und einem damit verschraubten Anschlussstück;
- Fig. 2: eine Längsschnittansicht einer zweiten Ausführungsform eines Hochdrucksensors mit einem einstückigen Messkörper und einem daran integral ausgeformten Anschlussstück;
- Fig. 3: drei perspektivische Darstellung einer dritten Ausführungsform eines Hochdrucksensors bestehend aus einem rohrförmigen Messkörper mit Anschlussgewinde und einem darauf aufgesetztem Werkzeugangriffsstück, wobei die Fig. 3A und die Fig. 3B perspektivische Sprengansichten aus verschiedenen Blickwinkeln und die Fig. 3C eine perspektivische Ansicht des zusammengesetzten Drucksensors zeigt;
- Fig. 4: eine vergrößerte fotografische Ansicht durch den geschlossenen Endbereich des Messkörpers einer der drei Ausführungsformen;
- Fig. 5: eine perspektivische fotografische Ansicht auf das geschlossene Ende des Messkörpers mit darauf außenseitig aufgebrachter Messwandlereinrichtung;
- Fig. 6: eine Seitenansicht eines Hochdrucksensors gemäß der ersten, zweiten oder dritten Ausführungsform mit daran angeschlossenem Verbindungskabel;
- Fig. 7: eine vergrößerte Detailansicht des mit A bezeichneten Bereichs am freien Ende des Hochdrucksensors von Fig. 6; und
- Fig. 8: ein elektrisches Schaltbild des in Fig. 7 dargestellten Hochdrucksensors.

In Fig. 1 ist eine erste Ausführungsform eines für Spitzendrucke oberhalb von 2.000 bar ausgelegten Hochdrucksensors 2 gezeigt. Der Hochdrucksensor 2 ist zur Messung von pulsierenden Drucken hydraulischer Systeme ausgelegt. Er weist ein aus einem einzelnen homogenen Material materialabtragend hergestellten Messkörper 4 in Form eines Monokörpers und ein Anschlussstück 6 auf.

Der Messkörper 4 ist aus martensitischem Stahl oder Edelstahl gefertigt. Hier ist der Messkörper aus ausscheidungsgehärteten martensitischem Stahl 17,4 PH (1.4542 oder 1.4548) geformt. Zur Herstellung des Messkörpers 4 wird aus einem massiven Stahlblock (Messkörperrohling) Material abgetragen, bis der Stahlblock die Form des Messkörpers 4 aufweist. Der Messkörper 4 ist an einem Ende 8 mit einer Sacköffnung 10 versehen. Die Sacköffnung 10 hat nahe dem Ende 8 einen ersten weiten Bereich 12, der mit einem Innengewinde 14 versehen ist. An dem weiten Bereich 12 schließt sich ein konischer Übergang 16 an, der in einen engen Bereich 18 mündet. Der enge Bereich 18 ist an dem dem konischen Übergang 16 gegenüberliegenden Ende durch eine Membran 20 verschlossen. Die Membran 20 ist einstückig mit dem Messkörper 4 ausgebildet und besteht aus demselben Material. Zum Herstellen der Sacköffnung wird zunächst eine Bohrung mit engem Durchmesser zum Bilden des engen Bereiches 18 eingebracht. Dann wird mittels eines Formfräsers der weite Bereich 12 eingebracht und der konische Übergang 16 ausgeformt. Ebenfalls mittels eines Formfräsers wird der enge Bereich 18 und die Membran in die endgültige Form gebracht. Aufgrund des Materials des Messkörpers reichen zur Bearbeitung speziell geschliffene Werkzeuge (HSS-Bohrer oder entsprechende Fräser) anstelle von supergehärteten aus.

Der enge Bereich 18 bildet einen Messdruckraum 22, der über die Sacköffnung 10 mit druckbeaufschlagtem Medium befüllbar ist. Durch das druckbeaufschlagte Medium wird die Membran 20 direkt je nach dessen Druck ausgelenkt. An der der Sacköffnung 10 gegenüberliegenden Seite der Membran 20 ist eine Messwandlereinrichtung 22 angebracht, die entsprechend der Auslenkung der Membran 20 eine elektrische Spannung erzeugt. Die Messwandlereinrichtung 22 umfasst eine Messbrücke mit Dehnmessstreifen.

In dem hier dargestellten Beispiel ist das, die Membran 20 bildende, geschlossene Ende 24 des Messkörpers 4 an einer gegenüber dem übrigen Grundkörper 26 hervorstehenden Erhebung 28 ausgebildet. Auf der Außenseite ist das geschlossene Ende 24 eben, auf die entsprechende ebene Fläche ist die Messwandlereinrichtung 22 aufgebracht, wie dies hiernach noch näher erläutert und gezeigt werden wird.

Das Anschlussstück 6 kann aus einem gegenüber dem Messkörper gleichen, bevorzugt aber aus unterschiedlichem Material bestehen. Man ist hier in der Auswahl freier, da die für die Membran 20 notwendigen Federeigenschaften nicht erfüllt sein müssen. Dementsprechend kann man das Material je nach Anforderung an die Hochdruckverbindung zu dem Messkörper 4 und insbesondere zu dem das zu vermessende Medium enthaltenden Element auswählen. Bei dem in Fig. 1 gezeigten Ausführungsbeispiel besteht das Anschlussstück 6 aus AISI 316 L (1.4435/1.4404).

In dem hier dargestellten Beispiel ist das Anschlussstück 6 an seinen beiden Enden je mit einem Konus 30 zum Abdichten von Hochdruckverschraubungen versehen. Konzentrisch zu der Längsachse des Anschlussstücks ist eine Durchgangsbohrung 32 vorgesehen. An der Außenseite ist das Anschlussstück ausgehend von dem in Fig. 1 unten gezeigten Ende zunächst mit der zentralen Mündung 34, mit dem dichtenden Konus 30, einer Schulter 36, einem Anschlussgewinde 38 zum Eindrehen des Hochdrucksensors 2 in eine entsprechende Öffnung eines das zu messende Medium enthaltenden Elements (nicht dargestellt), einem Sechskant 40 als Werkzeugangriffsbereich, einem weiteren Außengewinde 42, einer zweiten Schulter 44, dem zweiten Konus 30 und der zweiten Mündung 46 versehen.

In dem hier dargestellten Beispiel ist das Anschlussstück 6 axialsymmetrisch zu seiner Längsachse und außerdem symmetrisch zu seiner quer zu der Längsachse verlaufenden Mittelebene 48 ausgebildet. Demgemäss sind die beiden beidseits des Sechskants 40 abstrebenden Schraubanschlussenden identisch ausgebildet. Mit einem der beiden Gewinde, hier dem Außengewinde 42 ist das Anschlussstück 6 in das Innengewinde 14 des Messkörpers 4 eingeschraubt. Der Konus 30 schließt dabei dichtend an dem konischen Bereich 16 ab, wobei die zweite Mündung 46 mit dem engen Bereich 18 kommuniziert.

Auf diese Weise ist der Hochdrucksensor 2 durch eine schweißfreie Verbindung mit einem Anschlussstück 6 zum Einschrauben und mit einer nahtlos angebrachten Membran 20 versehen.

Der auf das Anschlussstück 6 aufgeschraubte Messkörper 4 ist mittels einer Verdrehsicherung 49 gesichert. Die Verdrehsicherung 49 ist hier durch eine Verklebung oder (punktuelle) Verschweißung der beiden Elemente 4, 6 gebildet.

Die in Fig. 2 dargestellte zweite Ausführungsform eines Hochdrucksensors 50 unterscheidet sich von der ersten Ausführungsform dadurch, dass das Anschlussstück 6 mit dem Messkörper 4 nicht verschraubt ist, sondern integraler Bestandteil des Messkörpers 52 ist. Der Hochdrucksensor 50 weist daher einen einzelnen einstückigen Messkörper 52 aus ausscheidungsgehärtetem Martensit 17,4 PH (1.4542 oder 1.4548) auf. Der Messkörper 52 ist mit einer Sacköffnung 54 versehen, die konzentrisch zu seiner Längsachse 56 von einem freien Ende 58 ausgehend bis nahe des anderen, geschlossen ausgeführten Endes 60 reicht. Der Messkörper 52 weist ausgehend von dem freien Ende 58 eine gegenüber dem übrigen Durchmesser der Sacköffnung 54 verengte Mündungsöffnung 62, einen dichtenden Konus 64, eine Schulter 66, ein Anschlussgewinde 68, einen Sechskant 70 als Werkzeugangriffsbereich, eine von dem Sechskant 70 vorstehende Erhebung 72, eine Schulter 74, eine das geschlossene Ende 60 abschließende Membran 76 und eine auf der flachen Außenseite der Membran 76 angebrachte Messwandlereinrichtung 78 auf.

Zum Herstellen des Hochdrucksensors 50 wird aus einem Stahlblock zunächst die Sacköffnung 54 mittels eines HSS-Bohrer ausgebohrt. Alternativ wird die Sacköffnung 54 mit einem Bohrer grob vorgebohrt und anschließend mit einem Formfräser in Form gebracht. Nach Einbringen der Sackbohrung 54 wird der Konus 64 geformt und durch Kaltumformung die Mündungsöffnung 62 verengt. Die Außenfläche wird gedreht und anschließend wird der Sechskant 70 spanabhebend eingebracht. Außerdem wird das Anschlussgewinde 68 hineingeschnitten. An dem die Membran 76 bildenden stehen gelassenen geschlossenen Ende 60 wird auf der Außenfläche (plane Ebene) die Messwandlereinrichtung 78 angebracht.

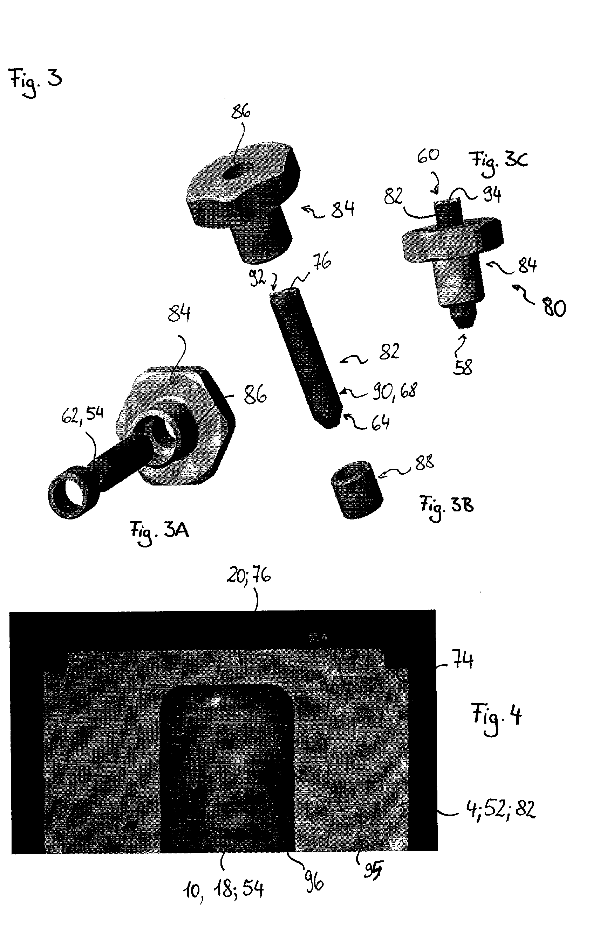

In Fig. 3 ist noch eine dritte Ausführungsform eines Hochdrucksensors 80 dargestellt. Dieser Hochdrucksensor ist ganz analog zu dem Hochdrucksensor 50 gemäß der zweiten Ausführungsform ausgebildet und hergestellt. Jedoch ist der Messkörper 82 nicht wie der Messkörper 52 integral mit dem Sechskant versehen, vielmehr wird nach dem Fertigen des hier rohrförmig ausgebildeten Messkörpers 82 mit dem geschlossenen Ende 60 der Sechskant 84 später aufgesetzt und fest mit dem einstückigen Messkörper 82 verbunden. Hierzu ist der Sechskant 84 ringförmig mit einer Durchgangsbohrung 86 versehen, in die der Messkörper 82 eingesetzt wird. Der Sechskant 84 wird mit einem Ring 88 fixiert. Die Befestigung des Sechskantes 84 und des Ringes 88 an dem Messkörper 82 erfolgt durch Anschweißen oder durch Presssitz, beispielsweise mittels Aufschrumpfen.

Obwohl hier der Sechskant 84 durch Schweißen befestigt wird, ist die Membran 76 des geschlossenen Endes 60 des Messkörpers 82 ohne Schweißverbindung integral mit dem Messkörper 82 und dem daran integral ausgebildeten Anschlussstück 90 mit Anschlussgewinde 68 und dichtenden Konus 64 verbunden.

An der Außenseite der Membran 76 ist wiederum eine Messwandlereinrichtung 92 befestigt. Die hier dargestellte Messwandlereinrichtung 92 weist einen Biegebalken 94 mit Dehnmessstreifen auf, der mit seinen beiden Ende fest an der Außenseite der Membran und mit seinem mittleren Bereich in der Mitte der Membran 36befestigt ist. Dazwischen ist der Biegebalken 94 sehr dünn ausgeführt und in seinen verdünnten Bereichen mit Dehnmesstreifen versehen. Außerdem kann auf dem Biegelbalken 94 eine Messbrücke angeordnet sein

In Fig. 4 ist das Ende eines der Messkörper 4, 52 oder 82 dargestellt. Das geschlossene Ende ist durch die integral mit den Rohrwandungen 94 des Messkörpers 4, 52 bzw. 82 ausgebildete Membran 20 bzw. 76 verschlossen. Der Übergang zwischen den Umfangswandungen 76 und der Innenseite de Membran 20, 76 ist gerundet ausgeführt. Die Sackbohrung 10, 54 ist gerade im Bereich der Membran 20, 76 sehr sorgfältig und homogen ausgeführt. Hierzu werden speziell geschliffene HSS-Bohrer oder Formfräser verwendet, wobei darauf geachtet wird, dass keinerlei Inhomogenitäten entstehen.

Der Abbildung kann man beispielhafte Verhältnisse der Wandstärken der Membran und der Rohrwandung zu dem Durchmesser der Sacköffnung entnehmen. In dem dargestellten Fall liegt dieses Verhältnis bei etwa 1 : 3,3 : 3,7.

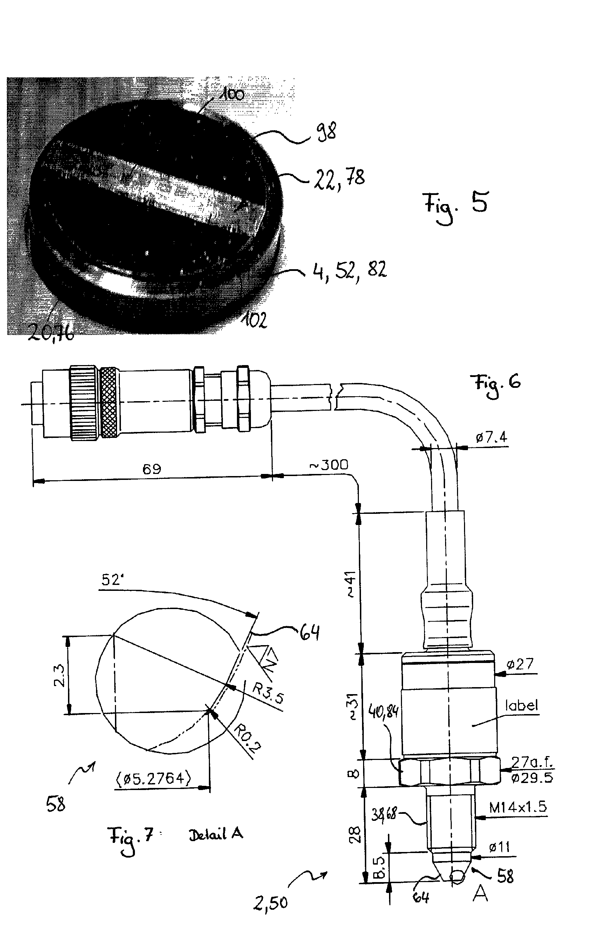

In Fig. 5 ist die Außenseite des in Fig. 4 gezeigte geschlossenen Endes des Messkörpers 4, 52 oder 82 zu sehen. Auf die plane Außenfläche 98 der Membran 20, 76 ist die Messwandlereinrichtung 22, 78 aufgebracht. Diese weist eine Messbrücke mit Dehnmessstreifen 100 auf einem Wegaufnehmer 102 auf. Der Wegaufnehmer 102 ist als flache metallene Folie ausgebildet. Diese ist lokal auf die plane Außenfläche 98 aufgeschweißt. Der Wegaufnehmer 102 wird, wie auch der Biegebalken 94, zu mehreren dicht gepackt auf einem Wafer hergestellt und dann zur Anbringung an der planen Außenfläche 98 vereinzelt. Auch der Biegebalken 94 kann in der gezeigten Weise als metallene Folie ausgebildet und lokal aufgeschweißt sein.

Fig. 6 zeigt den angeschlossenen Hochdrucksensor 2, 50 oder 80 mit einer beispielhaften Bemaßung. Das freie Ende 58 mit dem Konus 30 oder 64 dient zum Einschrauben beispielsweise direkt an eine gemeinsame Hochdruckleitung eines Einspritzsystems eines Common-Rail-Motors. Hierzu ist das freie Ende 58 wie das Anschlussstück einer Hochdruckrohrleitung geformt und mit dem Anschlussgewinde 38 bzw. 68 versehen. Das Festziehen des Hochdrucksensors 2, 50 oder 80 erfolgt über den Sechskant.

In der Detailansicht gemäß Fig. 7 des freien Ende 58 ist gezeigt, dass der Konus 64 im Bereich des freien Endes abgerundet und flacher ausgebildet ist.

In Fig. 8 ist ein beispielhaftes elektrisches Schaltbild für den in Fig. 6 gezeigten Hochdrucksensor 2, 80 oder 50 gezeigt. Das Außengehäuse dient dabei als Masse GND, das von Dehnmessstreifen der Messwandlereinrichtung 22, 78 oder 92 gelieferte Ausgangssignal wird als Ausgangsspannung Uₒᵤₜ abgenommen. Eine weitere Klemme + Uₒ dient zur Versorgungsspannung

Der Hochdrucksensor 2, 50 oder 80 ist auf einen Berstdruck bis maximal 4.000 bar ausgelegt, der übliche Messbereich liegt zwischen 0 und max. 2.000 bar mit maximalem Überdruck von 3.000 bar.

Der Hochdrucksensor ist auf Umgebungs-, Lager- und Medientemperaturen zwischen - 40°C und 125°C ausgelegt.

## Patentansprüche

1. Hochdrucksensor (2), ausgelegt auf Spitzendrücke oberhalb von 2000 bar, insbesondere zur Messung von pulsierenden Drücken hydraulischer Systeme oder in Hochdruckschneidesystemen, mit:
• einem einstückigen Messkörper (4), in den eine Sacköffnung (10) durch Materialaustrag eingebracht ist, so dass der Messkörper (4) einen in der Sacköffnung (10) ausgebildeten das zu messende Medium unmittelbar aufnehmenden Messdruckraum (18) umschließt, der durch eine einstückig mit dem Messkörper (4) durch Druckbeaufschlagung in dem Messdruckraum (18) auslenkbare Membran (20) begrenzt ist,
• einer Messwandlereinrichtung (22), die Auslenkungen der Membran (20) in elektronisch verwertbare Signale (Uₒᵤₜ) umwandelt,
• einem als Hochdruckrohrleitungsaußengewinde ausgebildeten Anschlussgewinde (38) zum Anschließen des Hochdrucksensors (2) an eine Anschlussöffnung in einem das druckbeaufschlagte Medium beinhaltendes Element und
• einem Werkzeugangriffsbereich (40) wie Sechskant (40) oder dergleichen zum Ermöglichen eines Eindrehens des Hochdrucksensors (2) in die Anschlussöffnung,
**dadurch gekennzeichnet,**
**dass** die Sacköffnung (10) des einstückigen Messkörpers (4) an ihrem offenen Ende (18) mit einem ersten Bereich (12) größerer Weite, der mit einem Innengewinde (14) versehen ist, an ihrem durch die Membran (20) verschlossenen Ende (24) mit einem zweiten Bereich (18) kleinerer Weite, und mit einem konischen Übergang (16) zwischen diesen Bereichen (12,18 ) versehen ist,
**dass** in dieses Innengewinde (14) ein mit einem passenden ersten Außengewinde (42) und zu dem konischen Bereich (16) passenden ersten Konus (30) versehenes erstes Ende eines Anschlussstücks (6) nach Art einer Hochdruckverschraubung eingeschraubt ist, dass das Anschlussstück (6) rohrförmig nach Art einer Hochdruckleitung ausgebildet ist und an einem zweiten Ende mit dem Anschlussgewinde (38) und einem zweiten Konus (30) und zwischen seinen beiden Enden an seinem Außenumfang mit dem Werkzeugangriffbereich (40) versehen ist und
**dass** die Verschraubung von Anschlussstück und Messkörper durch einen Verdrehschutz (48) gesichert ist.

2. Hochdrucksensor nach Anspruch 1,
**dadurch gekennzeichnet,**
**dass** das Anschlussstück (6) symmetrisch zu seiner sich senkrecht zu seiner Längsachse erstreckenden Mittelebene (48) ausgebildet ist.

3. Hochdrucksensor (50,80), ausgelegt auf Spitzendrücke oberhalb von 2000 bar, insbesondere zur Messung von pulsierenden Drücken hydraulischer Systeme oder in Hochdruckschneidesystemen, mit:
• einem einstückigen Messkörper (52, 82), in den eine Sacköffnung (54) durch Materialaustrag eingebracht ist, so dass der Messkörper (52, 82) einen in der Sacköffnung (54) ausgebildeten das zu messende Medium unmittelbar aufnehmenden Messdruckraum umschließt, der durch eine einstückig mit dem Messkörper (52, 82) durch Druckbeaufschlagung in dem Messdruckraum auslenkbare Membran (76) begrenzt ist,
• einer Messwandlereinrichtung (78, 92), die Auslenkungen der Membran (76) in elektronisch verwertbare Signale umwandelt,
• einem als Hochdruckrohrleitungsaußengewinde ausgebildeten Anschlussgewinde (68) zum Anschließen des Hochdrucksensors (52, 82) an eine Anschlussöffnung in einem das druckbeaufschlagte Medium beinhaltendes Element und
• einem Werkzeugangriffsbereich wie Sechskant (70, 84) oder dergleichen zum Ermöglichen eines Eindrehens des Hochdrucksensors (50, 80) in die Anschlussöffnung,
**dadurch gekennzeichnet,**
**dass** der Messkörper (52, 82) selbst einstückig als kappenartiges Hochdruckrohrleitungsstück ausgebildet ist, das an seinem mit der Mündung (62) der Sacköffnung (54) versehenen Ende (58) mit dem Anschlussgewinde (68) und einem Konus (64) versehen ist, um den Messkörper (52, 82) nach Art einer Hochdruckverschraubung mit dem das druckbeaufschlagte Medium beinhaltenden Element zu verschrauben, wobei der Werkzeugangriffbereich (70, 84) einstückig angeformt ist oder als Ringelement (84) über den Messkörper (82) geschoben daran fixiert ist.

4. Hochdrucksensor nach Anspruch 3,
**dadurch gekennzeichnet,**
**dass** die Sacköffnung (54) im wesentlichen zylinderförmig ausgebildet ist und ihre Länge ein Vielfaches, insbesondere mehr als das 4- bis 10fache, ihres Durchmesser beträgt.

5. Hochdrucksensor nach einem der Ansprüche 3 oder 4,
**dadurch gekennzeichnet,**
**dass** die Sacköffnung (54) einen Durchmesser hat, der gleich oder kleiner als das 1,2-fache der Wandstärke der die Sacköffnung am Umfang umgebenden Wandungen (95) des Messkörpers ist.

6. Hochdrucksensor nach einem der Ansprüche 3 bis 5,
**dadurch gekennzeichnet,**
**dass** die die Sacköffnung (54) am Umfang umgebenden Wandungen (95) des Messkörpers (4, 52, 82) eine Wandstärke von wenigstens 2 mm haben.

7. Hochdrucksensor nach einem der voranstehenden Ansprüche,
**dadurch gekennzeichnet,**
**dass** der einstückige Messkörper (4, 52, 82) durch einen Monokörper und insbesondere aus einem einzelnen homogenen Material gebildet ist.

8. Hochdrucksensor nach einem der voranstehenden Ansprüch,
**dadurch gekennzeichnet,**
**dass** die Messwandlereinrichtung (22, 78, 92) eine Messbrücke mit Dehnmessstreifen, die direkt auf dem Messkörper (4, 52, 82) aufgebracht ist, und/oder einen zusätzlich aufzubringenden Wegaufnehmer (102), wie insbesondere einen Biegebalken (94), oder einen Kraftsensor, jeweils ausgestattet mit einem Dehnmessstreifen aufweist.

9. Hochdrucksensor nach einem der voranstehenden Ansprüche,
**dadurch gekennzeichnet,**
**dass** der Messkörper (52, 82) durch ein Gegenstück einer Hochdruckverschraubung gebildet ist.

10. Hochdrucksensor nach einem der voranstehenden Ansprüche,
**dadurch gekennzeichnet,**
**dass** die Messwandlereinrichtung (22, 78) einen Wegaufnehmer (102) aufweist, der lokal als metallische Folie auf den einstückigen Messkörper (4, 82) aufgeschweißt ist.

11. Hochdrucksensor nach einem der voranstehenden Ansprüche,
**dadurch gekennzeichnet,**
**dass** der Messkörper (4, 52, 82) mit der Membran (20, 76) einstückig aus ausscheidungsgehärtetem martensitischem Stahl gebildet ist.

12. Verfahren zum Herstellen eines Hochdrucksensors (50, 80), insbesondere nach einem der voranstehenden Ansprüche, der auf Spitzendrücke oberhalb von 2000 bar, insbesondere zur Messung von pulsierenden Drücken hydraulischer Systeme oder in Hochdruckschneidesystemen, ausgelegt ist und versehen ist mit:
• einem einstückigen Messkörper (52, 82), in den eine Sacköffnung (54) durch Materialaustrag so eingebracht ist, dass der Messkörper (52, 82) einen durch das zu messende Medium unmittelbar beaufschlagbaren in der Sacköffnung (54) angeordneten Messdruckraum umschließt und dass eine einstückig mit dem Messkörper (52, 82) durch Druckbeaufschlagung in dem Messdruckraum auslenkbare Membran (76) gebildet ist,
• einer Messwandlereinrichtung (78, 92), die Auslenkungen der Membran (76) in elektrisch verwertbare Signale umwandelt,
• einem als Hochdruckrohrleitungsaußengewinde ausgebildeten Anschlussgewinde (68) zum Anschließen des Hochdrucksensors an eine Anschlussöffnung in einem das druckbeaufschlagte Medium beinhaltendes Element und
• einem Werkzeugangriffsbereich wie Sechskant (70, 84) oder dergleichen zu Ermöglichen eines Eindrehens des Hochdrucksensors in die Anschlussöffnung,
**gekennzeichnet durch**
a) Bereitstellen eines stabförmigen Messkörperrohlings aus massivem ausscheidungsgehärtetem martensitischen Stahl,
b) materialaustragendes Einbringen der Sacköffnung (54) im wesentlichen konzentrisch zur Längsmittellinie des Messkörperrohlings, wobei die Membran die Sacköffnung begrenzend stehen gelassen wird,
c) Ausformen des Anschlussgewindes (68) an einem äußeren Umfangsbereich nahe dem mit der Mündung der Sacköffnung versehenen freien Ende (58) des Messkörpers,
d) Ausformen oder Anbringen des Werkzeugangriffsbereichs (70, 84) und
e) Anbringen der Messwandlereinrichtung (78, 92) an der Membran (76),
wobei die Reihenfolge der Schritte c) bis f) beliebig ist.

13. Verfahren nach Anspruch 12,
**dadurch gekennzeichnet,**
**dass** in Schritt b) die Sacköffnung (54) mittels Ausfräsen und/oder Ausbohren von einem Ende des stabförmigen Messkörperrohlings aus derart eingebracht wird, dass daraus ein einstückiger kappenartiger Messkörper (52, 82) gebildet wird, dessen anderes, geschlossenes Ende (60) als Druckmembran (76) verwendbar ist, und
**dass** Schritt e) Aufbringen eines Wegaufnehmers (102) auf das geschlossene Ende (60) beinhaltet.

14. Verfahren nach einem der voranstehenden Ansprüche,
**gekennzeichnet durch**
den nach Schritt a), in beliebiger Reihenfolge mit den übrigen Schritten erfolgenden Schritt:
f) Ausformen eines Dichtungskonus (64) an dem mit der Mündung (62) versehenen oder zu versehenden freien Ende (58) des Messkörpers (52, 82).

15. Verfahren nach einem der voranstehenden Ansprüche,
**gekennzeichnet durch**
den nach Schritt b) in beliebiger Reihenfolge mit den übrigen Schritten erfolgenden Schritt:
g) Verengen der Mündung (62) der Sacköffnung (54) auf einen gegenüber dem Sacköffnungsdurchmesser geringerem Mündungsdurchmesser.

16. Verfahren nach Anspruch 15,
**dadurch gekennzeichnet,**
**dass** das Verengen der Mündung (62) mittels Kaltumformung erfolgt.

17. Verfahren nach einem der voranstehenden Ansprüche,
**dadurch gekennzeichnet,**
**dass** in Schritt b) die Sacköffnung (54) mit speziell geschliffenen Bohrern, insbesondere HSS-Bohrern eingebohrt wird.

18. Verfahren nach einem der voranstehenden Ansprüche,
**dadurch gekennzeichnet,**
**dass** Schritt b) die Unterschritte enthält:
b1) Vorstechen einer Grobbohrung durch einen Formfräser und
b2) Nachbearbeiten der Grobbohrung durch einen Formbohrer.

19. Verfahren nach einem der voranstehenden Ansprüche,
**dadurch gekennzeichnet,**
**dass** Schritt d) enthält:
d1) Aufsetzen eines ringförmigen Sechskantstücks (84) auf den Messkörper (82) und
d2) Verbinden des Sechskantstücks (84) durch Schweißen oder Presssitz, insbesondere durch Aufschrumpfen, mit dem Messkörper (82).

20. Verfahren nach einem der voranstehenden Ansprüche,
**dadurch gekennzeichnet,**
**dass** Schritt e) lokales Aufschweißen eines als dünne metallische Folie ausgebildeten Wegaufnehmers (102) auf die dem Messraum abgewandte Seite (98) der Membran (76) enthält.

21. Verfahren nach einem der voranstehenden Ansprüche,
**dadurch gekennzeichnet,**
**dass** Schritt e) Herstellen von vielen mit Dehnmessstreifen versehenen Biegebalken (94) oder Kraft- und/oder Wegaufnehmern (102) auf einem Wafer, Vereinzeln der Biegebalken (94) oder Kraft- und/oder Wegaufnehmern (102) und Aufbringen eines dieser Biegebalken (94) oder Kraft- und/oder Weg-ufnehmer (102) auf die dem Messraum abgewandte Seite (98) der Membran (76).

22. Hochdrucksensor oder Verfahren nach einem der voranstehenden Ansprüche,
**dadurch gekennzeichnet,**
**dass** die Messwandlereinrichtung (22, 78, 92) derart ausgewählt, ausgebildet und angeordnet wird, dass sie bei Auslenkungen der Membran von weniger 5 µm auswertbare Signale liefert.
